Europäisches Patentamt

European Patent Office

Office européen des brevets

(19)

(11) Veröffentlichungsnummer: **0 279 494 B1**

(12) **EUROPÄISCHE PATENTSCHRIFT**

(45) Veröffentlichungstag der Patentschrift: **26.05.93**

(21) Anmeldenummer: **88200268.6**

(22) Anmeldetag: **13.02.88**

(51) Int. Cl.⁵: **B01D 53/14**

(54) **Verfahren zur Entschwefelung von Gasen.**

(30) Priorität: **17.02.87 DE 3704882**

(43) Veröffentlichungstag der Anmeldung:
**24.08.88 Patentblatt 88/34**

(45) Bekanntmachung des Hinweises auf die
Patenterteilung:
**26.05.93 Patentblatt 93/21**

(84) Benannte Vertragsstaaten:
**DE FR GB GR NL SE**

(56) Entgegenhaltungen:
**DE-A- 3 427 633**
**FR-A- 2 342 776**
**GB-A- 2 012 807**

(73) Patentinhaber: **METALLGESELLSCHAFT AG**
**Reuterweg 14 Postfach 3724**
**W-6000 Frankfurt/M.1(DE)**

Patentinhaber: **Linde Akfiengesellschaft**

**W-8023 Höllriegelskreuth(DE)**

(72) Erfinder: **Grünewald, Gerhard**
**Ph. Wasserbergstrasse 17**
**W-6500 Mainz-Gonsenheim(DE)**
Erfinder: **Alunic, Emil**
**Auf der Heide 6/13-1**
**W-6242 Kronberg(DE)**

**Beschreibung**

Die Erfindung betrifft ein Verfahren zum getrennten Entschwefeln eines ersten Gases und eines zweiten Gases, wobei beide Gase $H_2S$, COS und $CO_2$ enthalten, dabei werden die Schwefelverbindungen mit einem physikalisch wirkenden Lösungsmittel ausgewaschen, in einer ersten Waschzone wird das erste Gas, dessen $CO_2$−Anteil mindestens 1,5−mal so hoch wie im zweiten Gas ist, mit dem Lösungsmittel behandelt, wobei das Lösungsmittel die Schwefelverbindungen weitgehend und das im ersten Gas enthal−tene $CO_2$ teilweise löst, das zweite Gas, dessen COS−Gehalt mindestens doppelt so hoch ist wie im ersten Gas, wird in einer zweiten Waschzone teilweise entschwefelt, das aus der zweiten Waschzone austretende, teilentschwefelte zweite Gas wird in einer dritten Waschzone zur vollständigen Entschwefelung mit Lösungsmittel behandelt, das weitgehend frei von Schwefelverbindungen ist, das in der dritten Waschzone anfallende, beladene Lösungsmittel wird in die zweite Waschzone geführt und das mit Schwefelverbindungen beladene, aus der zweiten Waschzone ablaufende Lösungsmittel wird regeneriert.

Ein Verfahren dieser Art ist aus DE−A−34 27 633 bekannt, wobei es sich beim ersten Gas um ein Gasgemisch aus einer Konvertierung und beim zweiten Gas um ein nicht−konvertiertes Gas handelt.

Aus dem DE−A−1 296 133 und dem dazu korrespondierenden GB−A−1 164 407 sowie dem DE−A−1 544 080 und dem dazu korrespondierenden US−A−3 453 835 sind bereits Verfahren zur Entschwefelung von Gasen bekannt, bei denen als physikalisch wirkende Lösungsmittel beispielsweise Methanol, Xylol, N−Methyl−Pyrrolidon und Aceton verwendet werden. Anders als bei den chemisch wirkenden Waschlösungen hängt das Lösungsvermögen der physikalisch wirkenden Lösungsmittel in erster Näherung vom Partialdruck der auszuwaschenden Stoffe und von der Temperatur ab, unter denen die Gaswäsche erfolgt. Die Löslichkeit eines gasförmigen Stoffes in der Waschlösung wächst nämlich mit fallender Temperatur und mit steigendem Partialdruck. Daher auch kann das mit den Schwefelverbindungen beladene Lösungsmittel durch Temperaturerhöhung und/oder Entspannung in an sich bekannter Weise regeneriert werden.

Schwierigkeiten ergeben sich bei den bekannten Verfahren daraus, daß die Lösungsmittel nicht selektiv bezüglich der Schwefelverbindungen wirken, sondern auch andere in den Gasen enthaltenen Verbindungen, insbesondere $CO_2$, lösen. Durch im Lösungsmittel enthaltenes $CO_2$ wird die selektive Entschwefelung behindert, was bei bekannten Verfahren zu einem erhöhten Aufwand an Lösungsmittel führt.

Der Erfindung liegt die Aufgabe zugrunde, beim eingangs genannten Verfahren die zwei Gase mit unterschiedlichem Gehalt an $CO_2$ und COS so zu entschwefeln, daß die Menge an zu regenerierendem Lösungsmittel möglichst niedrig gehalten wird, auch soll neben den Schwefelverbindungen nur möglichst wenig $CO_2$ mit absorbiert werden. Erfindungsgemäß geschieht dies dadurch, daß das aus der ersten Waschzone austretende, beladene Lösungsmittel mindestens teilweise der zweiten Waschzone aufgegeben wird. Wenn man das beladene Lösungsmittel aus der ersten Waschzone nur zum Teil in die zweite Waschzone leitet, wird das restliche beladene Lösungsmittel direkt einer Regeneration zugeführt.

Dadurch, daß der $CO_2$−Gehalt des zweiten Gases relativ niedrig ist, bewirkt es in der zweiten Waschzone im Lösungsmittel eine gewisse $CO_2$−Desorption, wodurch die Temperatur des Lösungsmittels abgesenkt und die Aufnahmefähigkeit des Lösungsmittels für Schwefelverbindungen erhöht wird. Auf diese Weise ist das aus der zweiten Waschzone austretende Gas bereits erheblich entschwefelt und enthält mehr $CO_2$ als das eintretende Gas. Das insgesamt anfallende beladene Lösungsmittel enthält die ausgewaschenen Schwefelverbindungen und hat eine relativ geringe $CO_2$−Beladung. Die nachfolgende Regenerierung des Lösungsmittels mit Aufkonzentrierung des $H_2S$ wird dadurch erheblich erleichtert.

Ein weiterer Vorteil ist, daß bei niedrigem COS−Gehalt im ersten und hohem COS−Gehalt im zweiten Gas das COS in der zweiten Waschzone schon weitgehend ausgewaschen wird. Die nachfolgende Feinentschwefelung in der dritten Waschzone kann deshalb mit einer relativ geringen Menge an Lösungsmittel erfolgen. Hierdurch wird der Aufwand für die Regenerierung des Waschmittels nochmals verringert.

Das erste und das zweite Gas unterscheiden sich dadurch, daß der $CO_2$−Anteil im ersten Gas mindestens 1,5−mal so hoch wie im zweiten Gas ist. Als Beispiel kann gesagt werden, daß der $CO_2$−Gehalt des ersten Gases etwa im Bereich von 20 bis 40 Vol.% liegt und der $CO_2$−Gehalt des zweiten Gases etwa 2 bis 15 Vol.% beträgt. Als erstes Gas kommt z.B. ein konvertiertes Wassergas in Frage und beim zweiten Gas kann es sich um ein nicht konvertiertes Wassergas handeln. Das Wassergas enthält als Hauptkomponenten Wasserstoff und Kohlenoxide, wobei durch die Konvertierungsreaktion (CO + $H_2O$ = $CO_2$ + $H_2$) das CO ganz oder weitgehend entfernt wird. Bei dieser Konvertierung wird auch der COS−Gehalt reduziert, der im konvertierten Wassergas im Bereich von 2 bis 30 ppm liegt, während das nicht konvertierte Wassergas einen COS−Anteil von etwa 50 bis 1000 ppm aufweist. Allgemein kann gesagt werden, daß der $H_2S$−Anteil in beiden Gasen im Bereich von 0,1 bis 3 Vol.% liegt.

Für das Verfahren verwendet man die bekannten physikalisch wirkenden Lösungsmittel, insbesondere Methanol und N−Methyl−Pyrrolidon (NMP). In den Waschzonen liegen die Temperaturen im Bereich von +60˚C bis −80˚C, wobei man bei Drücken im Bereich von 10 bis etwa 100 bar arbeitet.

Es ist zweckmäßig, das in der dritten Waschzone anfallende, beladene Lösungsmittel in die zweite Waschzone zu führen, weil es für die Teilentschwefelung in der zweiten Waschzone noch ausreichend wirksam ist. Enthält das aus der dritten Waschzone kommende entschwefelte zweite Gas einen für seine Weiterverarbeitung störenden $CO_2$−Anteil, so wird dieses Gas in einer vierten Waschzone behandelt, in welcher $CO_2$ mindestens teilweise ausgewaschen wird. Das dabei anfallende beladene Lösungsmittel kann man ganz oder teilweise der dritten Waschzone aufgeben. In ähnlicher Weise entfernt man aus dem entschwefelten ersten Gas der ersten Waschzone das $CO_2$ in einer fünften Waschzone, sofern dies notwendig ist.

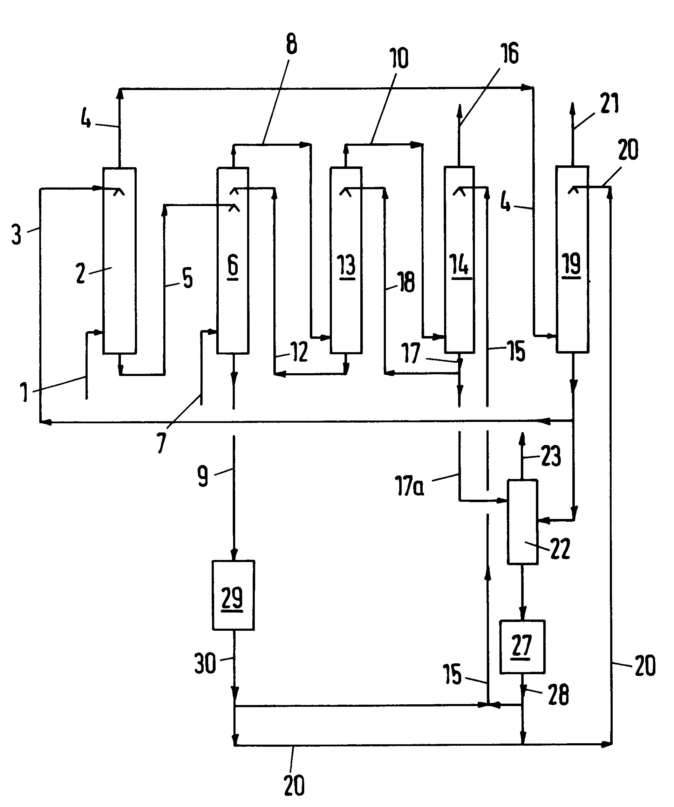

Eine Möglichkeit der Ausgestaltung des Verfahrens wird mit Hilfe der Zeichnung erläutert.

Zu behandeln sind ein erstes Gas, das $H_2S$, relativ viel $CO_2$ und relativ wenig COS enthält, sowie ein zweites Gas, das neben $H_2S$ relativ wenig $CO_2$ und relativ viel COS enthält. Der $CO_2$−Anteil im ersten Gas ist mindestens 1,5−mal so hoch wie im zweiten Gas und im zweiten Gas ist der COS−Anteil mindestens doppelt so hoch wie im ersten Gas. Das erste Gas wird in der Leitung (1) der ersten Waschzone (2) zugeführt, der man durch die Leitung (3) weitgehend schwefelfreies Lösungsmittel aufgibt. Die Waschzone (2) und die anderen Waschzonen enthalten in an sich bekannter Weise Füllkörper oder Stoffaustauschböden. Das Lösungsmittel besteht z.B. aus Methanol oder NMP, die Temperaturen in der Waschzone (2) und den übrigen Waschzonen liegen im Bereich von +60˚C bis −80˚C, wobei in den Waschzonen Drücke von 10 bis etwa 100 bar herrschen.

Das erste Gas verläßt die Waschzone (2) in der Leitung (4) weitgehend entschwefelt und enthält dabei noch einen erheblichen Anteil an $CO_2$.

Das zweite Gas, das in der Leitung (7) herangeführt wird, wird zunächst in der zweiten Waschzone (6) behandelt, wobei man die beladenen Lösungsmittel aus den Waschzonen (2) und (13) verwendet, die in den Leitungen (5) und (12) herangeführt werden. Das teilweise entschwefelte zweite Gas strömt in der Leitung (8) zur dritten Waschzone (13), wo die Feinentschwefelung stattfindet. Das weitgehend entschwefelte zweite Gas verläßt die dritte Waschzone in der Leitung (10). Sofern der $CO_2$−Gehalt in diesem Gas für die weitere Verwendung zu hoch ist, wird das Gas in einer vierten Waschzone (14) behandelt, der man regeneriertes Lösungsmittel aus der Leitung (15) zuführt. Entschwefeltes und auch weitgehend von $CO_2$ befreites Gas steht nunmehr in der Leitung (16) zur Verfügung.

Das aus der vierten Waschzone (14) in der Leitung (17) ablaufende Lösungsmittel enthält kaum Schwefelverbindungen. Deshalb wird ein Teilstrom davon in der Leitung (18) abgezweigt und zum Entschwefeln in der dritten Waschzone (13) verwendet. Die Regenerierung des in der Leitung (17a) verbleibenden Lösungsmittels erfolgt in an sich bekannter Weise zunächst in der Entspannungszone (22), wobei ein $CO_2$−reiches Abgas in der Leitung (23) anfällt. Für das Lösungsmittel schließt sich eine Regenerierung (27) an, so daß regeneriertes Lösungsmittel in der Leitung (28) zur Verfügung steht.

Wenn man den $CO_2$−Gehalt im weitgehend entschwefelten Gas der Leitung (4) entfernen will, gibt man das Gas einer fünften Waschzone (19) auf, in welcher es mit regeneriertem Lösungsmittel aus der Leitung (20) behandelt wird. Das entschwefelte und weitgehend von $CO_2$ befreite erste Gas steht dann in der Leitung (21) zur weiteren Verwendung zur Verfügung.

Wie aus der Zeichnung hervorgeht, werden die aus den Waschzonen (2) und (13) ablaufenden beladenen Lösungsmittel der zweiten Waschzone (6) zugeführt und dort zum teilweisen Entschwefeln des zweiten Gases verwendet. Das gebrauchte, Schwefelverbindungen enthaltende Lösungsmittel fließt in der Leitung (9) zu einer Regeneriervorrichtung (29), die z.B. als Heißregenerierung in an sich bekannter Weise ausgestaltet sein kann. Die Schwefelverbindungen und auch das mitgeführte $CO_2$ werden dort aus dem Lösungsmittel weitgehend entfernt. Regeneriertes Lösungsmittel fließt in der Leitung (30) ab und wird teilweise zusammen mit regeneriertem Lösungsmittel aus der Regeneration (27) in der Leitung (15) zur vierten Waschzone (14) geführt. Der Rest des regenerierten Lösungsmittels aus der Regeneriervorrichtung (29) wird zusammen mit dem restlichen regenerierten Lösungsmittel aus der Regeneration (27) durch die Leitung (20) zur fünften Waschzone (19) geführt. Aus der Zeichnung ist für den Fachmann ersichtlich, daß er die dritte Waschzone (13) auch unmittelbar über der zweiten Waschzone (6) anordnen kann und so eine apparativ einfache Anordnung erhält.

Wenn man auf die Entfernung von $CO_2$ aus den Gasen der Leitungen (4) und (10) verzichtet, entfallen die vierte Waschzone (14) und die fünfte Waschzone (19) sowie die Entspannungszone (22) und die Regenerierung (27). Man verteilt dann das regenerierte Lösungsmittel der Leitung (30) direkt auf die erste Waschzone (2) und die dritte Waschzone (13); die Leitungen (3) und (18) sind dann mit der Leitung (30) verbunden.

BEISPIEL

In einer der Zeichnung entsprechenden Verfahrensführung, bei der die vierte und fünfte Waschzone (14,19) entfallen, wird folgendermaßen gearbeitet:

Der ersten Waschzone (2) gibt man durch die Leitung (3) regeneriertes NMP in einer Menge von 100 m³/h auf und das gleiche Lösungsmittel wird durch die Leitung (18) der dritten Waschzone in einer Menge von 70 m³/h zugeführt. In beiden Waschzonen herrscht ein Druck von 59 bar. In die erste Waschzone (2) leitet man das erste Gas in einer Menge von 150 000 Nm³/h ein, die Menge des der zweiten Waschzone (6) aufgegebenen zweiten Gases beträgt 100 000 Nm³/h.

Das erste und das zweite Gas, das jeweils eine Temperatur von etwa 40°C hat, setzt sich wie folgt zusammen:

|  | erstes Gas | zweites Gas |
|---|---|---|
| $CO_2$ (Vol.%) | 41,75 | 15,65 |
| $H_2$ + CO (Vol.%) | 58,0 | 84,0 |
| $H_2S$ (Vol.%) | 0,25 | 0,35 |
| COS (ppm) | 7 | 150 |

Das Reingas der Leitung (4) enthält noch etwa 1 ppm $H_2S$ und 5 ppm COS. Das in der Leitung (8) die zweite Waschzone (6) verlassende Gas, dessen Menge 106 540 Nm³/h beträgt, besteht zu 21 Vol.% aus $CO_2$ und enthält noch 0,2 Vol.% $H_2S$ sowie 10 ppm COS. Das entschwefelte zweite Gas, das in einer Menge von 103 110 Nm³/h in der Leitung (10) abgezogen wird, enthält nur noch 7 ppm COS.

Die Lösungsmittelströme in den Leitungen (5) und (12) haben eine Temperatur von 20°C und weisen folgende Beladungen (gemessen in Nm³ pro m³ Lösungsmittel) auf:

|  | Leitung (5) | Leitung (12) |
|---|---|---|
| Lösungsmittelmenge (m³/h) | 100 | 70 |
| $CO_2$ | 106 | 46 |
| $H_2S$ | 3,75 | 3 |
| COS | 0,003 | 0,0045 |

Zum Regenerieren leitet man durch die Leitung (9) 170 m³/h an Lösungsmittel, dessen Temperatur 11°C beträgt und das pro m³ 42 Nm³ $CO_2$ und 4,26 Nm³ $H_2S$ enthält.

Das Beispiel belegt folgende wichtige Aspekte: Das Gas der Leitung (8) enthält relativ viel $CO_2$, weil ein Teil des im Lösungsmittel der Leitung (5) enthaltenen $CO_2$ in der zweiten Waschzone (6) durch das zweite Gas ausgestrippt wird. Dieser Strippeffekt senkt auch die Temperatur des Lösungsmittels ab, wodurch seine Absorptionsfähigkeit für Schwefelverbindungen gesteigert wird. Das Gas der Leitung (8) ist deshalb bereits teilweise entschwefelt, vor allem aber ist sein COS-Gehalt (10 ppm) schon auf weniger als 10 % des ursprünglichen Wertes reduziert worden. Die nachfolgende, der restlichen Entschwefelung dienende dritte Waschzone (13) braucht deshalb nur noch für die Entfernung von $H_2S$ ausgelegt zu werden, wodurch sich der Lösungsmittelbedarf in der dritten Waschzone erheblich verringert. Das entschwefelte zweite Gas der Leitung (10) hat gegenüber dem in der Leitung (7) herangeführten zweiten Gas durch $CO_2$-Anreicherung im Volumen zugenommen, was für seine Weiterverwendung, z.B. als Brenngas in einer Gasturbine, einen Energiegewinn darstellt.

**Patentansprüche**

1. Verfahren zum getrennten Entschwefeln eines ersten Gases und eines zweiten Gases, wobei beide Gase $H_2S$, COS und $CO_2$ enthalten, dabei werden die Schwefelverbindungen mit einem physikalisch wirkenden Lösungsmittel ausgewaschen, in einer ersten, der Entschwefelung dienenden Waschzone (2) wird das erste Gas, dessen $CO_2$-Anteil mindestens 1,5-mal so hoch wie im zweiten Gas ist, mit dem Lösungsmittel behandelt, wobei das Lösungsmittel die Schwefelverbindungen weitgehend und das im ersten Gas enthaltene $CO_2$ teilweise löst, das zweite Gas, dessen COS – Gehalt mindestens doppelt so hoch ist wie im ersten Gas, wird in einer zweiten Waschzone (6) teilweise entschwefelt, das aus der zweiten Waschzone austretende, teilentschwefelte zweite Gas wird in einer dritten Waschzone (13) zur vollständigen Entschwefelung mit Lösungsmittel behandelt, das weitgehend frei von Schwefelverbin – dungen ist, das in der dritten Waschzone anfallende, beladene Lösungsmittel wird in die zweite Waschzone geführt und das mit Schwefelverbindungen beladene, aus der zweiten Waschzone ablau – fende Lösungsmittel wird regeneriert, dadurch gekennzeichnet, daß das aus der der Entschwefelung dienenden ersten Waschzone (2) austretende, mit Schwefelverbindungen beladene, $CO_2$ enthaltende Lösungsmittel mindestens teilweise der zweiten Waschzone (6) aufgegeben wird.

2. Verfahren nach Anspruch 1, dadurch gekennzeichnet, daß man das entschwefelte zweite Gas aus der dritten Waschzone (13) in eine vierte Waschzone (14) leitet, in welcher $CO_2$ mindestens teilweise ausgewaschen wird, wobei man das beladene Lösungsmittel ganz oder teilweise der dritten Waschzone zuführt.

3. Verfahren nach Anspruch 1 oder 2, dadurch gekennzeichnet, daß das aus der ersten Waschzone (2) austretende, weitgehend entschwefelte Gas einer fünften Waschzone (19) zugeführt wird, in der $CO_2$ mit regeneriertem Lösungsmittel weitgehend ausgewaschen wird.

4. Verfahren nach Anspruch 1 oder einem der folgenden, dadurch gekennzeichnet, daß als erstes und zweites Gas jeweils ein vor allem $H_2$ und Kohlenoxide enthaltendes Gasgemisch eingesetzt wird.

## Claims

1. A process for the separate desulphurisation of a first gas and of a second gas, both gases containing $H_2S$, COS and $CO_2$, in which process the sulphur compounds are washed out with a physically acting solvent, in a first washing zone (2) serving for desulphurisation the first gas, the $CO_2$ content of which is at least 1.5 times as high as in the second gas, is treated with the solvent, the solvent largely dissolving the sulphur compounds and partially dissolving the $CO_2$ contained in the first gas, the second gas, the COS content of which is at least twice as high as in the first gas, is partially desulphurised in a second washing zone (6), the partially desulphurised second gas emerging from the second washing zone is treated with solvent which is largely free of sulphur compounds in a third washing zone (13) for complete desulphurisation, the laden solvent produced in the third washing zone is passed into the second washing zone and the solvent laden with sulphur compounds which emerges from the second washing zone is regenerated, characterised in that the $CO_2$ – containing solvent laden with sulphur compounds emerging from the first washing zone (2) serving for desulphurisation is at least partially charged to the second washing zone (6).

2. A process according to Claim 1, characterised in that the desulphurised second gas is passed from the third washing zone (13) into a fourth washing zone (14) in which $CO_2$ is at least partially washed out, the laden solvent being supplied entirely or partially to the third washing zone.

3. A process according to Claim 1 or 2, characterised in that the largely desulphurised gas emerging from the first washing zone (2) is sent to a fifth washing zone (19) in which $CO_2$ is largely washed out with regenerated solvent.

4. A process according to Claim 1 or one of the following Claims, characterised in that in each case a gas mixture containing predominantly $H_2$ and carbon oxides is used as the first and second gas.

## Revendications

1. Procédé de désulfuration séparée d'un premier gaz et d'un second gaz, les deux gaz contenant $H_2S$, COS et $CO_2$, les composés soufrés étant éliminés par lavage par un solvant agissant par voie physique, le premier gaz, dont la proportion en $CO_2$ représente au moins 1,5 fois celle du second gaz, étant traité par le solvant dans une première zone de lavage (2) servant à la désulfuration, le solvant dissolvant, dans une grande mesure, les composés soufrés et partiellement le $CO_2$ contenu dans le premier gaz, le second gaz, dont la teneur en COS représente au moins deux fois celle du premier gaz, étant désulfuré partiellement dans une deuxième zone de lavage (6), le second gaz désulfuré partiellement et sortant de la deuxième zone de lavage étant traité dans une troisième zone de lavage (13) destinée à obtenir une désulfuration complète par du solvant essentiellement exempt de composés soufrés, le solvant chargé qui se forme dans la troisième zone de lavage étant envoyé à la deuxième zone de lavage et le solvant chargé de composés soufrés, qui sort de la deuxième zone de lavage, étant régénéré, caractérisé en ce qu'il consiste à charger au moins partiellement, dans la deuxième zone de lavage (6), le solvant qui sort de la première zone de lavage (2) servant à la désulfuration, qui est chargé de composés soufrés et qui contient du $CO_2$.

2. Procédé suivant la revendication 1, caractérisé en ce qu'il consiste à envoyer le second gaz désulfuré de la troisième zone de lavage (13) à une quatrième zone de lavage (14), dans laquelle du $CO_2$ est éliminé au moins partiellement par lavage, le solvant chargé étant envoyé en tout ou partie à la troisième zone de lavage.

3. Procédé suivant la revendication 1 ou 2, caractérisé en ce qu'il consiste à envoyer le gaz, désulfuré dans une grande mesure et sortant de la première zone de lavage (2), à une cinquième zone de lavage (19), dans laquelle du $CO_2$ est éliminé dans une grande mesure par lavage par du solvant régénéré.

4. Procédé suivant la revendication 1 ou l'une des suivantes, caractérisé en ce qu'il consiste à utiliser, comme premier et second gaz, respectivement un mélange gazeux contenant surtout $H_2$ et des oxydes de carbone.